Europäisches Patentamt

European Patent Office

Office européen des brevets

(11) Veröffentlichungsnummer: **0 391 840**
**A1**

## (12) EUROPÄISCHE PATENTANMELDUNG

(21) Anmeldenummer: **90810210.6**

(22) Anmeldetag: **15.03.90**

(51) Int. Cl.⁵: **B62B 17/02, B62B 19/00**

(30) Priorität: **06.04.89 CH 1279/89**

(43) Veröffentlichungstag der Anmeldung:
**10.10.90 Patentblatt 90/41**

(84) Benannte Vertragsstaaten:
**AT CH DE FR IT LI SE**

(71) Anmelder: **Federer, Josef**
**Marmorera-Scalotta**
**CH-7456 Sur/GR(CH)**

(72) Erfinder: **Federer, Josef**
**Marmorera-Scalotta**
**CH-7456 Sur/GR(CH)**

(74) Vertreter: **Kulhavy, Sava, Dipl.-Ing.**
**Patentanwaltsbüro S.V. Kulhavy Postfach**
**450 Kornhausstrasse 3**
**CH-9001 St. Gallen(CH)**

(54) **Zusatz-schneekufe.**

(57) Die Zusatz-Schneekufe weist einen ersten bzw. unteren Teil (11) und einen zweiten bzw. oberen Teil (12) auf. Der Unterteil (11) ist praktisch gleich ausgebildet wie ein Ski. Der Oberteil (12) ist zur Befestigung der Zusatz-Schneekufe (10 am Transportmittel (1) ausgebildet. Der Kufenoberteil (12) weist eine Schiene (15) auf, in welche die Kufe (2) des Schlittens (1) einsetzbar ist. Die Schiene (15) hat ein im wesentlichen U-förmiges Profil. Der Kufenunterteil (11) ist mit dem Boden (16) der Kufenschiene (15) verbunden. Die Schienenschenkel (18) sind mit Vorrichtungen versehen, welche zur Befestigung der Zusatz-Schneekufe (10) am Transportmittel (1) dienen.

Das Anbringen der Zusatz-Schneekufen an einem Transportmittel kann innerhalb kürzester Zeit bewerkstelligt werden, weil der Schlitten in die Schienen nur gesetzt und dort geklemmt wird.

Fig. 1

EP 0 391 840 A1

## Zusatz-Schneekufe

Die vorliegende Erfindung betrifft eine Zusatz-Schneekufe für ein Transportmittel, wie zum Beispiel für einen Schlitten oder Kinderwagen.

Es ist bekannt, Schneekufen an den Rädern von Kinderwagen anzubringen. Es ist auch bekannt, an gewöhnlichen Schlitten mit verhältnismässig schmalen Kufen breite Zusatz-Schneekufen anzubringen, damit man mit dem Schlitten auch im Tiefschnee fahren kann, usw. In diesen beiden Fällen werden die Zusatz-Schneekufen als Fertigprodukte verkauft.

In vielen Haushalten stehen gebrauchte und manchmal sogar noch ungebrauchte Skier ungenützt da. Mit der Zeit würde man diese an die Müllabfuhr abgeben, wodurch qualitativ hochstehende Produkte verloren gingen.

Die Aufgabe der vorliegenden Erfindung ist, eine Zusatz-Schneekufe anzugeben, welche so ausgeführt ist, dass sie die Verwendung von Skier ermöglicht.

Diese Aufgabe wird bei der Zusatz-Schneekufe der eingangs genannten Gattung erfindungsgemäss so gelöst, wie dies im kennzeichnenden Teil des Anspruchs 1 definiert ist.

Nachstehend werden Ausführungsbeispiele der vorliegenden Erfindung anhand der beiliegenden Zeichnungen näher erläutert. Es zeigt:

Fig. 1 in einer Seitenansicht die vorliegende Zusatz-Schneekufe, welche an einer der Kufen eines Schlittens angebracht ist,

Fig. 2 den Oberteil der Zusatz-Schneekufe nach Fig. 1, bevor dieser Oberteil zu einer Schiene von U-förmigem Profil verformt wird,

Fig. 3 in einer Frontansicht die vorliegende Zusatz-Schneekufe bevor die betreffende Partie eines Transportmittels in diese eingesetzt wird und

Fig. 4 in einer Seitenansicht einen Kinderwagen, welcher mit den vorliegenden Zusatz-Schneekufen ausgerüstet ist.

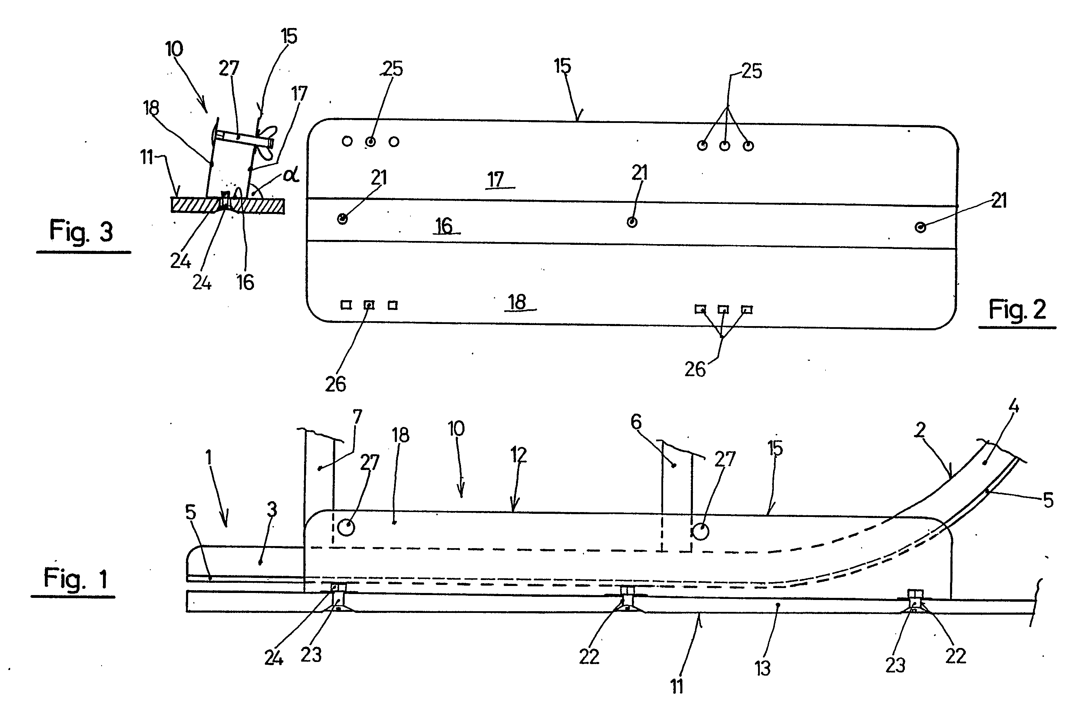

Fig. 1 zeigt in einer Seitenansicht einen Ausschnitt aus einem gewöhnlichen Schneeschlitten 1, und zwar jenen Abschnitt dieses Schlittens, welcher eine der Kufen 2 desselben umfasst. Diese Kufe 2 weist einen geradlinigen Abschnitt 3 sowie einen nach oben gebogenen Abschnitt 4 auf. Die Unterseite der Kufe 2 ist mit einem Metallbelag 5 versehen. An die Oberseite der Kufe 2 schliessen sich die vorder Strebe 6 sowie die hintere Strebe 7 an, auf deren oberen Enden die Sitzfläche (nicht dargestellt) des Schlittens befestigt ist. Die Kufen 2 des Schlittens 1 sind mit je einer Zusatz-Schneekufe 10 versehen.

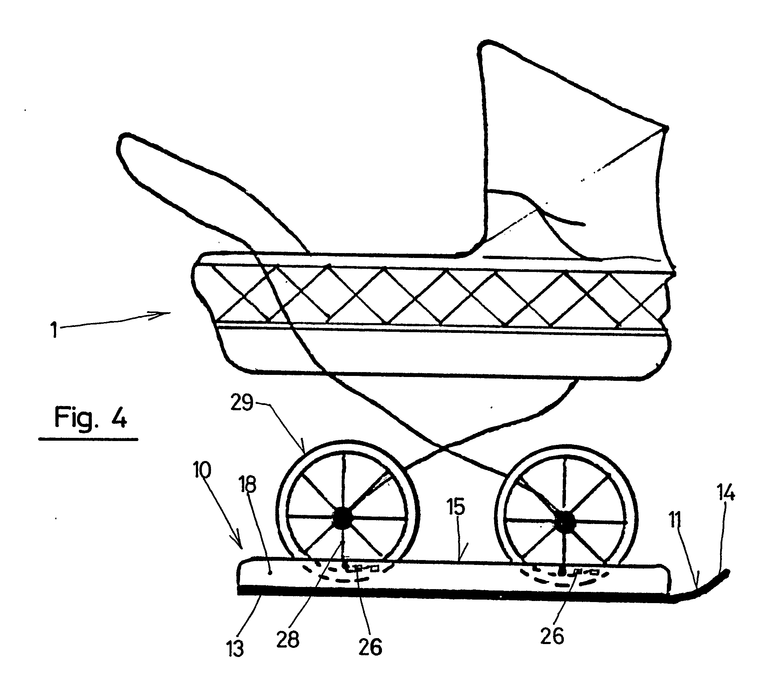

Die Zusatz-Schneekufe 10 weist einen ersten bzw. unteren Teil 11 und einen zweiten bzw. oberen Teil 12 auf. Der Kufenunterteil 11 ist praktisch gleich ausgebildet wie ein Ski, so dass dieser einen geradlinigen Abschnitt 13 sowie eine Spitze 14 (Fig. 4) aufweist. Der Kufenunterteil 11 kann als ein Ski geformt sein oder der Kufenunterteil 11 kann ein Ski bzw. wenigstens ein Abschnitt eines Skis sein. Wenn der Kufenunterteil 11 einen Abschnitt eines Skis darstellt, dann ist dies der vordere Skiabschnitt, welcher die nach oben gebogene Spitze 13 (Fig. 4) aufweist.

Der Kufenoberteil 12 ist zur Befestigung der Zusatz-Schneekufe am Transportmittel 1 ausgebildet. Zu diesem Zweck enthält der Kufenoberteil eine Schiene 15, in welche jene Partie bzw. Partien des Transportmittels 1 einsetzbar sind, über welche dieses auf der Fahrbahn aufliegt, wenn es mit keiner Zusatz-Schneekufe versehen ist. Im in Fig. 1 dargestellten Fall ist es vor allem der geradlinige Abschnitt 3 der Schlittenkufe 2, welcher sich in der Schiene 15 befindet.

Die Schiene 15 weist ein im wesentlichen U-förmiges Profil auf (Fig. 3), so dass sie einen Boden 16 sowie zwei sich an die Ränder dieses Bodens 16 anschliessende Schenkel 17 und 18 umfasst. Der Kufenunterteil 11 ist an der Unterseite des Bodens 16 einer solchen Schiene 15 befestigt. Zu diesem Zweck sind erste Oeffnungen 21 (Fig. 2) im Schienenboden 16 und weitere Oeffnungen 22 im Kufenunterteil 11 ausgeführt. Diese Oeffnungen 21 und 22 sind im mittleren Bereich des jeweiligen Kufenteiles 11 und 16 ausgeführt. Durch diese Oeffnungen 21 und 22 gehen Schrauben 23 hindurch, deren Köpfe im Kufenunterteil 11 versenkt sind. Die Schraubschäfte ragen in das Innere der Schiene 15 hinein, wo Muttern 24 auf diesen aufgeschraubt sind. Auf diesen Schraubenenden ruht der Metallbelag 5 der Schlittenkufe 2.

Die Schenkel 17 und 18 der Schiene 15 sind mit einer Vorrichtung versehen, welche zur Befestigung der Zusatz-Schneekufe 10 am Transportmittel 1 dient. Diese Befestigungsvorrichtung weist Mittel zum Festklemmen der in der Schiene 15 eingesetzten Partie 2 des Transportmittels 1 auf. Diese Klemmittel umfassen Paare von Löchern 25 und 26, welche in den Schenkeln 17 und 18 der Schiene 15 einander gegenüberliegend ausgeführt sind. Durch ein solches Löcherpaar 25, 26 kann eine Klemmschraube 27 hindurchgesteckt werden. Zwischen dem Kopf und der Mutter an dieser Schraube 27 befinden sich die Schenkel 17 und 18 der Schiene. Diese Löcher 25, 26 sind in einem so grossen Abstand vom Boden 16 der Schiene 15 ausgeführt, dass die Klemmschraube 27 über der Schlittenkufe 2 oder einer andersartigen Partie des Transportmittels 1 liegt. Dies ermöglicht eine zuverlässige Befestigung der Schlittenkufe 2 in der Schiene 15.

Das Löcherpaar 25, 26 ist an jener Stelle des Schienenschenkels ausgeführt, welche sich, in der Fahrtrichtung des Transportmittels gesehen, vor der Strebe 6 bzw. 7 befindet. Die Anbringung der Löcher 25 und 26 an dieser Stelle ergibt sich aus der Erkenntnis, dass die Kräfte, welche während der Fahrt auf die Zusatzkufen 10 einwirken starke und zudem noch schlagartig wirkende Kräfte sind, welche bestrebt sind, die Zusatzkufen 10 nach hinten zu verschieben. Die Streben 6 und 7 helfen, die Wirkung solcher Kräfte abzufangen.

Die Schlittenstreben 6 und 7 befinden sich bei Schlitten unterschiedlicher Herkunft in unterschiedlichen Abständen voneinander. Damit die vorliegende Zusatzkufe möglichst unviversell anwendbar ist, ist der jeweiligen Schienenschenkel 17 bzw. 18 mit einer Anzahl der Löcher 25 und 26 versehen. Diese Löcher 25 und 26 bilden eine Reihe im jeweiligen Schienenschenkel 17 bzw. 18, wobei die jeweilige Löcherreihe sich praktisch in der Längsrichtung der Schiene 15 erstreckt. Beim Einsetzen der Kufenpartie 2, 6 und 7 eines Schlittens 1 in die Kufenschiene 15 kann man sich jenes Löcherpaar 25, 26 zum Durchstecken der Klemmschraube 27 problemlos aussuchen, welches sich unmittelbar vor der betreffenden Schlittenstrebe 6 bzw. 7 befindet.

Es ist sehr zweckmässig, eine Schlossschraube als Klemmschraube 27 zu benutzen. Dies deswegen, weil sich ein Vierkant unter dem Kopf der Schlossschraube am Schaft derselben befindet, welcher eine Verdrehung der Schraube beim Anziehen einer auf dem Schaft derselben aufgeschraubten Mutter verhindert. Um diese Möglichkeit ausnützen zu können, ist eines der Löcher 25 bzw. 26 eckig ausgeführt, während das andere Loch eine kreisförmige Kontur aufweisen kann. Besonders zweckmässig ist es, wenn das Loch 26 im äusseren Schienenschenkel 18 eckig ausgeführt ist. Denn in einem solchen Fall befindet sich der nur leicht gewölbte und sonst glatte Kopf der Klemmschraube 27 an der Aussenseite der Zusatzkufe 10, wodurch die Gefahr einer Verletzung des Schlittenbenützers praktisch ausgeschlossen ist.

Die Schenkel 17 und 18 der Schiene 15 verlaufen im demontierten Zustand der Zusatzkufe 10 praktisch parallel zueinander. Wenn die Zusatzkufe 10 an einem Schlitten 1 montiert ist, dann laufen die äusseren Randpartien der Schienenschenkel 17 und 18 unter der Einwirkung der Klemmschrauben 27 leicht zusammen.

Wenn die Streben 6 und 7 des Schlittens 1 senkrecht zur Schlittenkufe 2 stehen, dann können die Schienenschenkel 17 und 18 zum Schienenboden 16 praktisch rechtwinklig stehen. In der Regel sind die Streben 6 und 7 eines Schlittens jedoch nach innen (Fig. 3) geneigt. Damit der Kufenunterteil 11 zur Fahrbahnoberfläche praktisch parallel angeordnet ist, ist es zweckmässig, dass die Schienenschenkel 17 und 18 mit dem Schienenboden 16 einen Winkel Alpha schliessen, welcher vom Rechten unterschiedlich ist. Die Grösse dieses Winkels hängt von der Neigung der Streben 6 und 7 des jeweiligen Schlittens ab.

Die Kufenschiene 15 kann aus Blech, Kunststoff oder ähnlich sein. Wenn die Schiene 15 aus Kunststoff ist, dann kann sie durch Extrusion hergestellt werden, wobei sie bereits während der Herstellung den genannten U-Querschnitt erhält. Die Löcher 21, 25 und 26 können erst in der fertigen Schiene 15 ausgeführt werden. Die Kufenschiene 15 kann jedoch auch aus Blech sein. In diesem Fall wird ein geeignetes Blatt aus einer Blechtafel zunächst herausgeschnitten. Bei diesem Blatt werden die Ecken abgerundet und die Löcher 21, 25 und 26 an entsprechenden Stellen desselben ausgeführt. Hiernach wird das Blatt zu einem U-Profil verformt. Fig. 2 zeigt die Kufenschiene 15 im noch ausgebreiteten Zustand, d.h. bevor das Blattmaterial zu einem U-Profil verformt wird. Die U-förmige Schiene ist in Fig. 3 in Frontansicht dargestellt.

Fig. 4 zeigt die vorliegende Zusatz-Schneekufe 10, welche an einem Kinderwagen angebracht ist. In dieser Fig. 4 ist unter anderem jenes eckige Loch 26 im äusseren Schenkel 18 der Kufenschiene 15 ersichtlich, welches sich unmittelbar vor einer der Speichen 28 des Kinderwagenrades 29 befindet, bevor eine der Klemmschrauben in dieses Loch 26 eingesetzt wird.

Es können auch andere Vorrichtungen zur Befestigung der Schlittenkufe oder des Wagenrades im Kufenoberteil 12 verwendet werden als jene, die vorstehend beschrieben sind.

Das Anbringen der Zusatz-Schneekufen an einem Schlitten kann in kürzester Zeit bewerkstelligt werden, weil der Schlitten in die Schienen nur gesetzt wird und unter der Benützung von Flügelmuttern kann die Schlittenkufe zwischen den Schienenschenkeln rasch und ohne Verwendung von Werkzeugen geklemmt werden. Die Demontage der Zusatzkufe ist gleich einfach. Wenn vorgefertigte Schienen 15 vorliegen, dann kann beinahe jedermann zu Hause seine Skier, die zum Skifahren nicht mehr gebraucht werden, an der Schiene 15 befestigen, wodurch man die vorliegenden Zusatzkufen erhalten kann.

## Ansprüche

1. Zusatz-Schneekufe für ein Transportmittel, wie zum Beispiel für einen Schlitten oder Kinderwagen, dadurch gekennzeichnet, dass die Zusatz-Schneekufe (10) einen ersten bzw. unteren Teil (11) und einen zweiten bzw. oberen Teil (12) aufweist, dass der Unterteil (11) praktisch gleich ausgebildet ist wie ein Ski und dass der Oberteil (12) zur Befestigung der Zusatz-Schneekufe (10 am Transportmittel (1) ausgebildet ist.

2. Schneekufe nach Anspruch 1, dadurch gekennzeichnet, dass der Kufenunterteil (11) den vorderen Abschnitt eines Skis umfasst, welcher die nach oben gebogene Spitze (14) aufweist.

3. Schneekufe nach Anspruch 1, dadurch gekennzeichnet, dass der Kufenoberteil (12) eine Schiene (15) aufweist, in welche jene Partie bzw. Partien (2;29) des Transportmittels (1) einsetzbar sind, über welche dieses auf der Fahrbahn aufliegt, wenn es mit keiner Zusatz-Schneekufe versehen ist.

4. Schneekufe nach Anspruch 3, dadurch gekennzeichnet, dass die Schiene (15) ein im wesentlichen U-förmiges Profil aufweist, dass der Kufenunterteil (11) mit dem Boden (16) der Kufenschiene (15) verbunden ist, welcher die Schenkel (17,18) der Schiene verbindet, und dass die Schienenschenkel (17,18) mit Vorrich tungen versehen sind, welche zur Befestigung der Zusatz-Schneekufe (10) am Transportmittel (1) ausgeführt sind.

5. Schneekufe nach Anspruch 4, dadurch gekennzeichnet, dass die Befestigungsvorrichtung Mittel (25,26,27) zum Festklemmen der in der Schiene (15) eingesetzten Partie (2;29) des Transportmittels (1) aufweisen.

6. Schneekufe nach Anspruch 5, dadurch gekennzeichnet, dass die Klemmittel Löcher (25,26) in den Schenkeln (17,18) der Schiene (15) umfassen, dass einem dieser Löcher (25) in einem der Schienenschenkel (17 bzw. 18) ein gegenüberliegendes Loch (26) im anderen Schenkeln zugeordnet ist, dass die einander zugeordneten Löcherpaare an jener Stelle der Schienenschenkel ausgeführt sind, welche sich, in der Fahrtrichtung des Transportmittels gesehen, vor der in der Schiene (15) eingesetzten Transportmittelpartie (2;29) befindet, und dass die Klemmittel ferner zumindest eine Schraube (27) umfassen, welche durch die einander gegenüberliegenden Löcher (25,26) in den Schienenschenkeln hindurchsteckbar ist.

7. Schneekufe nach Anspruch 6, dadurch gekennzeichnet, dass die Klemmschraube (27) eine Schlosschraube ist und dass das Loch (26) in einem der Schienenschenkel (18) eckig ist und zur Aufnahme des Vierkantes am Schaft der Schlosschraube (27) bestimmt ist.

8. Schneekufe nach Anspruch 6, dadurch gekennzeichnet, dass die Löcher (25,26) im jeweiligen Schienenschenkel (17 bzw. 18) eine Reihe bilden, welche sich praktisch in der Längsrichtung der Kufenschiene (15) erstreckt.

9. Schneekufe nach Anspruch 4, dadurch gekennzeichnet, dass die Schenkel (17,18) der Schiene praktisch parallel zueinander verlaufen und dass sie einen Winkel Alpha mit dem Schienenboden schliessen können, welcher vom Rechten unterschiedlich ist.

EP 0 391 840 A1

Fig. 3

Fig. 2

Fig. 1

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | CH-A-483333 (A. GÜDEL) * das ganze Dokument * | 1-7 | B62B17/02 B62B19/00 |
| A | | 8 | |
| X | US-A-2824746 (N. SCHUMMER) * das ganze Dokument * | 1-6 | |
| A | --- | 7-9 | |
| X | FR-E-80031 (ETABLISSEMENTS PLIANFER) * das ganze Dokument * | 1-6 | |
| A | --- | 7-9 | |
| X | US-A-4105217 (V. METELOW) * Spalte 4, Zeile 38 - Spalte 5, Zeile 66; Figuren * | 1-6 | |
| A | ----- | 7-9 | |

**RECHERCHIERTE SACHGEBIETE (Int. Cl.5 )**

B62B

Der vorliegende Recherchenbericht wurde für alle Patentansprüche erstellt

| Recherchenort | Abschlußdatum der Recherche | Prüfer |
|---|---|---|
| DEN HAAG | 12 JULI 1990 | FRANKS B.G. |